# EUROPÄISCHE PATENTSCHRIFT

(11) **EP 0 649 787 B1**
(45) Veröffentlichungstag und Bekanntmachung des Hinweises auf die Patenterteilung: **27.11.1996**
(21) Anmeldenummer: 94113825.7
(22) Anmeldetag: 03.09.1994
(51) Int. Cl.: B64F 1/22

(54) **Schleppfahrzeug für Flugzeuge**
Aircraft ground handling tractor
Véhicule tracteur pour avion

(30) Priorität: 23.10.1993 DE 4336197
(43) Veröffentlichungstag der Anmeldung: 26.04.1995
(73) Patentinhaber: MAN Gutehoffnungshütte Aktiengesellschaft, 46145 Oberhausen (DE)
(72) Erfinder: Michaelsen, Torsten, Dipl.-Ing., D-58313 Herdecke (DE); Franken, Wilhelm, Dipl.-Ing., D-46487 Wesel (DE); Kretschmann, Ernest, D-46149 Oberhausen (DE)

(56) Entgegenhaltungen:
- EP-A- 0 335 611
- EP-A- 0 437 285

## Beschreibung

Die Erfindung betrifft ein Verfahren zur Bergung von Flugzeugen, Transport-und Einsatzfahrzeugen mit einem Schleppfahrzeug mit Räderfahrgestell und eigenem Fahrantrieb zum Bugsieren eines Flugzeuges ohne Schleppstange, wobei das Fahrzeug eine offene, etwa U-förmige Ausnehmung aufweist mit einer darin angeordneten Einspann- und Hubvorrichtung für das Bugfahrwerk des Flugzeuges.

Stangenlose Flugzeugschlepper zum Bugsieren von Flugzeugen für Flugzeugbewegungen auf Flugplätzen sind seit Mitte der 80er Jahre bekannt. Sie werden inzwischen sowohl für Operationen wie das Push-back, Schleppmanöver in Flugzeugwerften, Hallen und auch als Schleppfahrzeuge für längere Strecken innerhalb des Flughafengeländes benutzt.

Außer den zuvor erwähnten stangenlosen Flugzeugschleppern sind auch Schleppfahrzeuge zum Manövrieren von Flugzeugen mittels einer am Schleppfahrzeug und am Bugfahrwerk des Flugzeuges angelenkten Schleppstange im Einsatz. Zum Rückwärtschieben eines Flugzeuges vom Einstiegsterminal wird die Schleppstange am Bug des Schleppfahrzeuges angekoppelt. Wenn das Flugzeug geschleppt werden soll, wird die Schleppstange am Fahrzeugheck angekoppelt.

Aufgabe der Erfindung ist es, einen stangenlosen Flugzeugschlepper des Standes der Technik in die Lage zu versetzen, gegebenenfalls auch Flugzeuge und auf Flugplätzen verwendete Transport- und Einsatzfahrzeuge, die von der Lande- oder der Fahrbahn abgekommen sind und die mit eigener Kraft nicht aus ihrer Lage befreit werden können, zu bergen.

Mit einem Flugzeugschlepper mit angelenkter Schleppstange gelingt ein derartiges Bergungsmanöver in der Regel. Steht jedoch kein Flugzeugschlepper mit angelenkter Schleppstange und auch kein anderes geeignetes Fahrzeug zur Verfügung, sondern lediglich ein stangenloses Schleppfahrzeug für Flugzeuge, so ist man nicht imstande, mit diesem Schlepper, selbst wenn eine Schleppstange am Bug des Fahrzeuges angekoppelt würde, das havarierte Flugzeug oder ein anderes vorerwähntes Fahrzeug zu bergen. Die übertragbare Zugkraft des Schleppers am Zughaken reicht für derartige Operationen nicht aus, da die Zugkraft proportional dem auf den Antriebsrädern des Schleppers ruhenden Gewicht ist und das notwendige Gewicht nur bei aufgenommenem Bugfahrwerk vorhanden wäre.

Die Lösung der Aufgabe besteht bei dem Verfahren zur Bergung von Flugzeugen, Transport- und Einsatzfahrzeugen darin, daß ein stangenloser Flugzeugschlepper des Standes der Technik mit einem Zusatzgewicht in Form eines metallischen Zylinders mit Deichsel und Kupplung zum Anbringen einer Schleppstange ausgerüstet wird. Dieses Zusatzgewicht mit Deichsel und Kupplung wird wie das Bugfahrwerk eines Flugzeuges von der Einspann- und Hubvorrichtung aufgenommen und auf dem Schleppfahrzeug gesichert. An die dann heckseitig befindliche Kupplung kann eine Schleppstange angelenkt werden. Mit Hilfe des Zusatzgewichtes entsprechend der für den gewählten Flugzeugschlepper-Typ zulässigen Bugradlast in Form eines Massiv-Zylinders oder eines mit geeignetem Füllmaterial gefüllten Hohlzylinders wird der Schlepper in die Lage versetzt, die für das Bergen eines Flugzeuges erforderliche Zugkraft an der angekoppelten Schleppstange aufzubringen.

Die Merkmale, die das erfindungsgemäße Verfahren definieren, sind im ersten Patentanspruch genannt.

Gegenstand der Unteransprüche sind vorteilhafte Ausgestaltungen der Erfindung.

So ist für die Handhabung zweckmäßig, daß das Zusatzgewicht in Gestalt eines auf eine Achse aufgezogenen Zylinders mit Deichsel und Kupplung für die Schleppstange mit einem höhenverstellbaren Spornrad im Deichselbereich ausgerüstet wird.

Das zylinderförmige Zusatzgewicht kann als massiver Körper ausgebildet werden oder als Hohlkörper. Im letzteren Fall wird der Hohlzylinder mit Beschwerungsmaterial aufgefüllt.

Der Zylindermantel des Zusatzgewichtes wird zweckmäßigerweise mit Gummi oder einem gummiartigen Werkstoff beschichtet, damit Beschädigungen der Bugradaufnahmevorrichtung des Flugzeugschleppers vermieden werden.

Der nach der Erfindung mit einem Zusatzgewicht ausgerüstete Flugzeugschlepper kann selbstverständlich bei Bedarf auch auch als Bugsierfahrzeug für Push-back oder anderen Flugzeug-Manövrierbewegungen eingesetzt werden.

Es ist grundsätzlich möglich, das Verfahren zur Bergung von Flugzeugen, Transport- und Einsatzfahrzeugen mit allen stangenlosen Flugzeugschleppern durchzuführen, die der Gattung nach dem Oberbegriff zuzurechnen sind, und somit mit Hilfe eines zuvor geschilderten Zusatzgewichtes im Bedarfsfall einen stangenlosen Flugzeugschlepper in einen Flugzeugschlepper mit Schleppstange umzufunktionieren, so beispielsweise einen stangenlosen Flugzeugschlepper nach EP 0 269 685 B1, nach DE 33 18 077 C2, nach EP 0 437 285 A2 oder ähnliche Fahrzeuge.

Die Erfindung wird anhand von schematischen Zeichnungen näher erläutert. Es zeigen:
- Fig.1: eine Seitenansicht eines stangenlosen Flugzeugschleppers mit eingespanntem Zusatzgewicht,
- Fig.2: eine Seitenansicht gemäß Fig.1 mit angehobenem Zusatzgewicht,
- Fig.3: eine Seitenansicht des Zusatzgewichtes und
- Fig.4: eine Draufsicht auf das Zusatzgewicht.

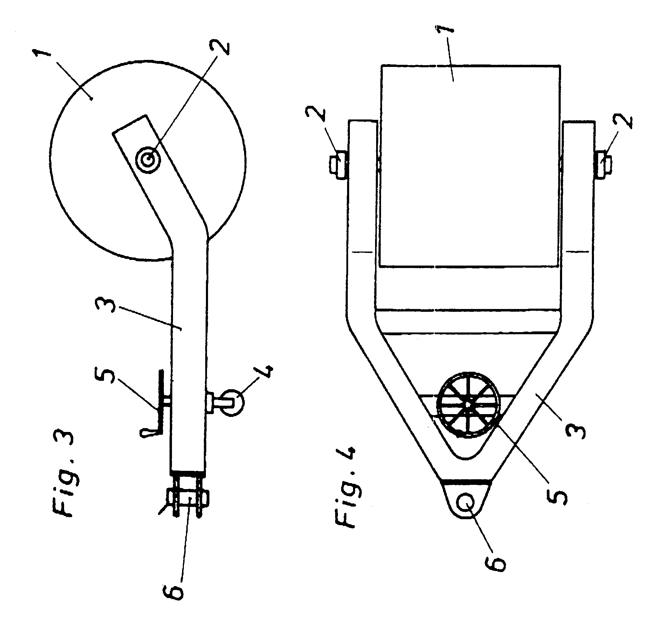

Das Zusatzgewicht 1 nach den Fig.3 und 4 hat die Form eines Zylinders, der auf eine Achse 2 aufgezogen ist. Eine Deichsel 3 ist mit ihren seitlichen Gabelstangen an den Enden der Achse 2 gelagert.

Die Deichsel 3 weist in der Nähe der Gabelung ein Spornrad 4 auf, das mit Hilfe einer (nicht dargestellten) Spindel oder Zahnstange höhenverstellbar ist. Das Handrad 5 dient der Verstellung.

An der Gabelung der Deichsel 3 ist eine Kupplung 6 angeordnet, an die eine (nicht dargestellte) von Schleppstangen-Flugzeugschleppern bekannte Schleppstange angelenkt wird.

Das zylinderförmige Zusatzgewicht 1 kann ein metallischer Massivkörper oder ein mit Füllmaterial gefüllter Hohlkörper sein. Zweckmäßigerweise wird die Zylinderoberfläche mit Gummi oder einem gummiartigen Werkstoff beschichtet.

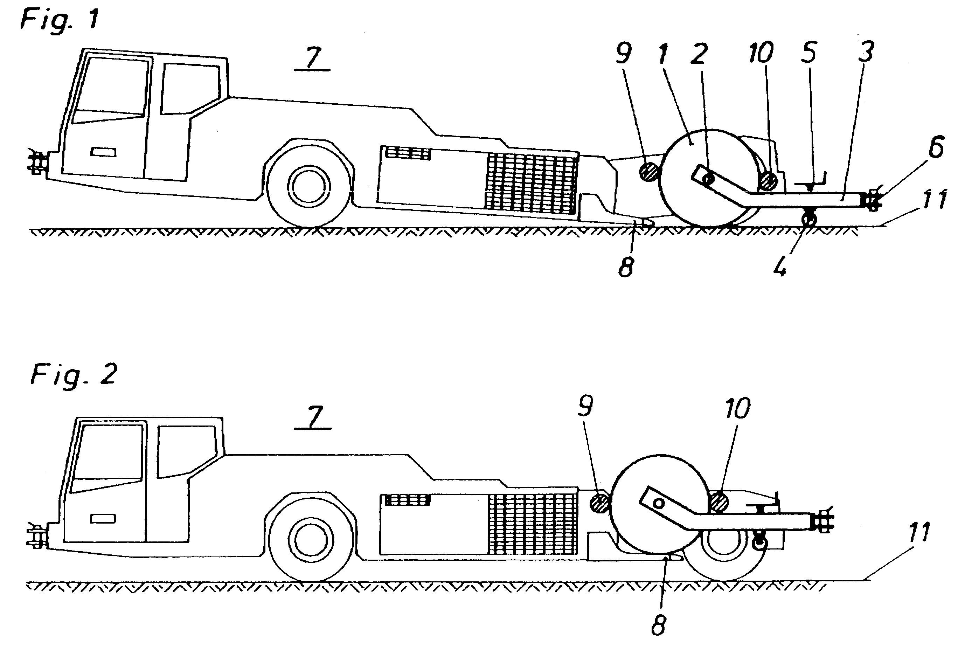

Bei dem stangenlosen Flugzeugschlepper 7 nach den Fig.1 und 2 handelt es sich um ein Fahrzeug nach EP 0 269 685 B1 mit getrennt ausgebildetem Vorder- und Hinterteil, die mittels einer einzigen, zur Hinterachse parallelen Knickachse miteinander verbunden sind. In beiden Figuren ist der hintere Teil des Flugzeugschleppers geschnitten dargestellt, um die Hubschaufel 8 und das Zusatzgewicht 1 mit Deichsel 3 erkennen zu können.

Gemäß Fig.1 ist der Flugzeugschlepper 7 in abgeknickter, d.h. abgesenkter Position gezeigt. Das zylinderförmige Zusatzgewicht mit Deichsel 3 usw. befindet sich noch auf dem Boden 11, ist jedoch bereits von den Greiferrollen 10 der (nicht dargestellten) Greifarme und den Push-Out-Rollen 9 festgehalten.

Fig.2 zeigt den Flugzeugschlepper 7 in angehobener, d.h. gestreckter Position. Das zylinderförmige Zusatzgewicht 1 befindet sich auf der Hubschaufel 8, die infolge Streckung des Fahrgestells über die Knickachse vom Boden 11 abgehoben ist. In dieser Position kann der von Hause aus stangenlose Flugzeugschlepper 7, wenn an die Kupplung 6 des zylinderförmigen Zusatzgewichtes 1 eine (nicht dargestellte) Schleppstange angelenkt wird, als Schleppfahrzeug zum Bergen von beispielsweise von der Landebahn abgekommene Flugzeuge benutzt werden.

## Patentansprüche

1. Verfahren zur Bergung von Flugzeugen, Transport- und Einsatzfahrzeugen mit einem Schleppfahrzeug mit Räderfahrgestell und eigenem Fahrantrieb zum Bugsieren eines Flugzeuges ohne Schleppstange, wobei das Fahrzeug eine offene, etwa U-förmige Ausnehmung aufweist mit einer darin angeordneten Einspann- und Hubvorrichtung für das Bugfahrwerk des Flugzeuges,
dadurch gekennzeichnet,
daß das Schleppfahrzeug (7) mit einem Zusatzgewicht (1) in Gestalt eines auf eine Achse (2) aufgezogenen metallischen Zylinders mit Deichsel (3) und Kupplung (6) zum Anbringen einer Schleppstange oder einem ähnlichen Schleppmittel ausgerüstet wird, das von der Einspann- und Hubvorrichtung aufgenommen wird.

2. Verfahren nach Anspruch 1,
dadurch gekennzeichnet,
daß das zylinderförmige Zusatzgewicht (1) als Massivkörper maximal ein Gewicht entsprechend der zulässigen Bugradlast für den jeweiligen Schleppfahrzeug-Typ aufweisen kann.

3. Verfahren nach Anspruch 1,
dadurch gekennzeichnet,
daß das zylinderförmige Zusatzgewicht (1) ein Hohlkörper gefüllt mit Füllmaterial ist, wobei das Gesamtgewicht des Zylinders maximal der zulässigen Bugradlast für den jeweiligen Schleppfahrzeug-Typ entsprechen kann.

4. Verfahren nach den Ansprüchen 1 bis 3,
dadurch gekennzeichnet,
daß unterhalb der Deichsel (3) ein heb- und absenkbares Spornrad (4) angeordnet ist.

5. Verfahren nach den Ansprüchen 1 bis 3,
dadurch gekennzeichnet,
daß die Oberfläche des Zusatzgewichtes (1), d.h. des Massiv- oder Hohlzylinders, mit Gummi oder einem gummiartigen Werkstoff beschichtet ist.

6. Verfahren nach den Ansprüchen 1 bis 5,
dadurch gekennzeichnet,
daß das mit dem zylinderförmigen Zusatzgewicht (1) ausgerüstete Schleppfahrzeug (7) bedarfsweise ein Bugsierfahrzeug für Flugzeuge ist.

## Claims

1. Method of recovering aeroplanes, transport vehicles and operational vehicles using a towing vehicle having a wheeled chassis and its own drive for manoeuvring an aeroplane without a tow rod, the vehicle having an open, approximately U-shaped recess with a clamping and lifting device arranged therein for the nose landing gear of the aeroplane, characterised in that the towing vehicle (7) is equipped with an additional weight (1) in the form of a metallic cylinder which is fitted onto a shaft (2) and which has a tow bar (3) and a coupling (6) for the attachment of a tow rod, or a similar towing means, which is accommodated by the clamping and lifting device.

2. Method according to Claim 1, characterised in that the cylindrical additional weight (1) as a solid body may have, at a maximum, a weight corresponding to the permissible nose wheel load for the relevant type of towing vehicle.

3. Method according to Claim 1, characterised in that the cylindrical additional weight (1) is a hollow body filled with filling material, it being possible for the total weight of the cylinder to correspond, at a maximum, to the permissible nose wheel load for the relevant type of towing vehicle.

4. Method according to Claims 1 to 3, characterised in that a spur wheel (4) which can be lifted and lowered is arranged below the tow bar (3).

5. Method according to Claims 1 to 3, characterised in that the surface of the additional weight (1), that is to say, of the solid or hollow cylinder, is coated with rubber or a rubber-like material.

6. Method according to Claims 1 to 5, characterised in that the towing vehicle (7) equipped with the cylindrical additional weight (1) is, if necessary, a manoeuvring vehicle for aeroplanes.

## Revendications

1. Procédé d'assistance aux avions, véhicules de transport ou de service au moyen d'un véhicule de remorquage automoteur monté sur roues, pour remorquer un avion sans utiliser de barre d'attelage, le véhicule présentant une ouverture en forme de U équipée d'un dispositif de saisie et de levage du train avant de l'avion,
caractérisé en ce que,
le véhicule de remorquage (7) est équipé d'un poids auxiliaire (1) constitué d'un cylindre métallique monté sur un axe (2) relié à un timon (3) et un accouplement (6) pouvant recevoir une barre ou un moyen analogue de remorquage, le poids auxiliaire pouvant être pris en charge par le dispositif de saisie et de levage.

2. Procédé selon la revendication 1,
caractérisé en ce que,
le poids auxiliaire (1) de forme cylindrique est un corps massif dont le poids maximal correspond à la charge de train avant que peut supporter le type de véhicule de remorquage considéré.

3. Procédé selon la revendication 1,
caractérisé en ce que,
le poids auxiliaire (1) de forme cylindrique est un corps creux garni d'un matériau de remplissage permettant de donner au cylindre un poids total maximal correspondant à la charge de train avant que peut supporter le type de véhicule de remorquage considéré.

4. Procédé selon la revendication 1 à 3,
caractérisé en ce que,
il est prévu sous le timon (3) une roulette de queue (8) réglable en montée et en descente.

5. Procédé selon les revendications 1 à 3,
caractérisé en ce que,
la surface externe du poids auxiliaire (1), c'est-à-dire du cylindre massif ou creux, est garnie d'un revêtement en caoutchouc ou matériau analogue.

6. Procédé selon les revendications 1 à 5,
caractérisé en ce que,
le véhicule de remorquage (7) équipé du poids auxiliaire (1) de forme cylindrique peut au besoin servir au remorquage des avions.
